# EUROPÄISCHE PATENTSCHRIFT

(11) **EP 2 996 626 B1**
(45) Veröffentlichungstag und Bekanntmachung des Hinweises auf die Patenterteilung: **07.09.2022**
(21) Anmeldenummer: 14725050.0
(22) Anmeldetag: 07.05.2014
(51) Int. Cl.: A61C 13/10, A61C 13/08

(54) **ZAHNPROTHESEN**
DENTAL PROSTHESES
PROTHÈSES DENTAIRES

(30) Priorität: 13.05.2013 EP 13167514
(43) Veröffentlichungstag der Anmeldung: 23.03.2016
(73) Patentinhaber: Vita Zahnfabrik H. Rauter GmbH & Co. KG, 79713 Bad Säckingen (DE)
(72) Erfinder: CHRISTEN, Urban, 79713 Bad Säckingen (DE); KERSCHENSTEINER, Eva, 79713 Bad Säckingen (DE)
(74) Vertreter: dompatent von Kreisler Selting Werner - Partnerschaft von Patent- und Rechtsanwälten mbB
(86) Internationale Anmeldenummer: PCT/EP2014/059390
(87) Internationale Veröffentlichungsnummer: WO 2014/184078

(56) Entgegenhaltungen:
- WO-A1-2012/041329
- WO-A1-2013/124452
- US-A1- 2006 040 234

## Beschreibung

Die Erfindung betrifft Zahnprothesen, wobei es sich um Teil- oder Vollprothesen handeln kann.

Zur Herstellung von Zahnprothesen ist es aus DE 20 2012 100359 bekannt, einen Rohling, bei dem es sich insbesondere um eine kreiszylindrische Ronde handelt, aus mehreren Schichten aufzubauen. Die einzelnen Schichten sind unterschiedlich eingefärbt bzw. pigmentiert. Aus dem kreiszylindrischen Rohling erfolgt durch materialabtragende Bearbeitung insbesondere durch Fräsen und Schleifen ein Herstellen der Zahnprothese. Der mehrschichtige Aufbau des Rohlings dient dazu, einerseits ein Zahnelement und andererseits ein Kieferelement auszubilden. Die Materialschicht, die das Zahnelement ausbildet ist zahnfarben eingefärbt. Aus diesem Bereich des Rohlings wird der mindestens eine Zahn ausgefräst. An die das Zahnelement ausbildende Schicht des Rohlings grenzt eine insbesondere zahnfleischfarben eingefärbte Schicht an, die das Kieferelement ausbildet. Aus diesem Bereich des Rohlings wird der an die Zähne angrenzende im Wesentlichen das Zahnfleisch nachbildende Teil der Zahnprothese ausgebildet. Das Kieferelement liegt in fertig hergestelltem Zustand an dem Kiefer und bei einer Oberkieferprothese auch an dem Gaumen an. Nachteilig bei mehrschichtig aufgebauten Ronden ist, dass im Wesentlichen gerade, klar sichtbare Trennlinien zwischen den einzelnen Schichten bestehen. Dies ist insbesondere bei den sich in der Farbgebung stark unterscheidenden Schichten nachteilig, die einerseits das Zahnelement und andererseits das Kieferelement ausbilden. Dies führt dazu, dass kein ästhetischer, natürlicher Eindruck entsteht. Insbesondere im Bereich der bei geöffnetem Mund sichtbaren Zähne ist dies für die Patienten nicht akzeptabel.

Eine Zahnprothese mit einer Gummi-Gingiva ist ferner aus US 2006/0040234 bekannt, und offenbart den Oberbegriff des Anspruchs 1. Aufgabe der Erfindung ist es Zahnprothesen zu schaffen, die eine der natürlichen Ästhetik nahekommendes Aussehen hat. Die Lösung der Aufgabe erfolgt erfindungsgemäß durch die Merkmale des Anspruchs 1.

Ein Rohling zur Herstellung von Zahnprothesen dient zur Herstellung von Teil- und/oder Vollprothesen. Die Herstellung der Prothese erfolgt insbesondere durch materialabtragende Bearbeitung wie Fräsen. Der Rohling weist mindestens zwei Schichten auf, wobei es sich jedoch um ein Zahnelement und ein Kieferelement handelt. Das Zahnelement dient zur Nachbildung mindestens eines Zahnes durch materialabtragende Bearbeitung, wobei der das Teilelement ausbildende Bereich des Rohlings vorzugsweise zahnfarben eingefärbt bzw. pigmentiert ist. Das Kieferelement dient zur Ausbildung des sich an das Zahnelement anschließenden mit dem Kiefer und einer Oberkieferschiene zusätzlich mit dem Gaumen, in Kontakt kommenden Elements der Zahnprothese. Besonderes bevorzugt ist es, dass der Rohling einstückig ausgebildet ist, wobei insbesondere im Wesentlichen dasselbe Material für das Zahnelement und das Kieferelement verwendet wird und dieses entsprechend eingefärbt bzw. pigmentiert wird, so dass das Zahnelement vorzugsweise zahnfarben und das Kieferelement vorzugsweise zahnfleischfarben ausgebildet ist.

Um die zwischen dem Zahnelement und dem Kieferelement auftretende Trennlinie zu kaschieren bzw. zu überdecken, ist erfindungsgemäß ein Zahnfleischelement vorgesehen. Das Zahnfleischelement wird in einem Aufnahmebereich des Zahnelements und/oder des Kieferelements angeordnet, um die erfindungsgemäße Zahnprothese herzustellen.

Das Zahnfleischelement ist hierbei vorzugsweise zahnfleischfarben eingefärbt und wird an dem Zahnelement und/oder dem Kieferelement nach der materialabtragenden Bearbeitung bspw. durch Aufkleben fixiert. Durch Vorsehen eines oder mehrerer derartiger Zahnfleischelemente kann insbesondere im Sichtbereich der Zahnprothese, in dem Bereich zwischen dem Zahnelement und dem Kieferelement, der in dem geöffneten Mund sichtbar ist, eine Trennlinie zwischen dem Zahnelement und dem Kieferelement überdeckt werden. Dies ist auch dann vorteilhaft, wenn keine klare Trennlinie zwischen den beiden Elementen besteht, da es in bevorzugter Weiterbildung möglich ist, das Zahnfleischelement derart auszubilden, dass es sich auch in Bereiche zwischen benachbarten Zähnen erstreckt. Hierzu ist es bevorzugt, dass das mindestens eine Zahnfleischelement beispielweise keilförmig oder spitz zulaufende Ansätze aufweist, die sodann zwischen zwei benachbarten Zähnen angeordnet sind. Diese Ansätze weisen vorzugsweise aufeinander zulaufende Seitenkanten auf. Hierdurch kann ein sehr natürlicher Eindruck der Zahnprothese realisiert werden.

Eine bevorzugte Ausführungsform des Zahnfleischelements mit mindestens einem, insbesondere mehreren, zwischen benachbarten Zähnen angeordneten Ansätzen ist vorzugsweise derart ausgebildet, dass die Ansätze über ein Verbindungselement miteinander verbunden sind.

Dies hat den Vorteil, dass ein plattenförmiges, insbesondere gekrümmtes Zahnfleischelement ausgebildet werden kann, das einerseits die Trennlinie zwischen dem Zahnelement und dem Kieferelement überdeckt und andererseits ein einziges Element genutzt werden kann, um die Zwischenräume zwischen mehreren benachbarten Zähnen auszufüllen und eine natürliche Anmutung der Zahnprothese zu realisieren.

Um selbst bei sehr dünn ausgestalteten Zahnfleischelementen störende Kanten oder Übergänge zu vermeiden, ist es bei einer besonders bevorzugten Weiterbildung bevorzugt, den Aufnahmebereich für das mindestens eine Zahnfleischelement als Vertiefung bzw. als mehrere Vertiefungen auszugestalten, in die das entsprechende Zahnfleischelement eingelegt wird. Dies hat den Vorteil, dass ein im Wesentlichen stufenfreier Übergang realisiert ist.

Der Rohling von Zahnprothesen ist bspw. aus einem Polymermaterial hergestellt.

Der Rohling kann eine erste und eine zweite Schicht aufweisen, wobei sich die erste Schicht farblich von der zweiten Schicht, die mit der ersten Schicht in Kontakt steht, unterscheidet und wobei die erste Schicht vorzugsweise zahnfleischfarben und die zweite Schicht vorzugsweise zahnfarben ausgestaltet ist. Die erste und zweite Schicht bestehen vorzugsweise aus einem gleichen oder verschiedenen Kunststoff-Grundmaterial, wobei die zweite Schicht im Vergleich zur ersten Schicht eine größere Oberflächenhärte aufweist.

Der Kunststoff der ersten und/oder zweiten Schicht ist vorzugsweise Polymethylmethacrylat (PMMA), Polyamid, Polycarbonat oder Kombinationen davon.

In einer weiteren Ausführungsform ist der erfindungsgemäße Rohling dadurch gekennzeichnet, dass in der zweiten Schicht ein Füllstoff vorhanden ist, der dem Kunststoffgrundmaterial eine größere Oberflächenhärte und/oder Abrasionsbeständigkeit im Vergleich zur ersten Schicht vermittelt. Der Füllstoff kann beispielsweise ein silanisierter Füllstoff, silanisiertes Siliziumdioxid oder Quarzmehl sein.

In einer weiteren Ausführungsform ist der erfindungsgemäße Rohling dadurch gekennzeichnet, dass die Abrasionsbeständigkeit der zweiten Schicht im Vergleich zur ersten Schicht größer ist.

Der erfindungsgemäße Rohling kann mittels eines Verfahrens hergestellt werden, dass dadurch gekennzeichnet ist, dass
- zur Herstellung der ersten Schicht des erfindungsgemäßen Rohlings eine erste Mischung zahnfleischfarbener Kunststoffpartikel mit den entsprechenden Kunststoffmonomeren und eventuell einem Radikalkettenstarter bereitgestellt wird,
- zur Herstellung der zweiten Schicht des erfindungsgemäßen Rohlings eine zweite Mischung des Füllstoffs mit zahnfarbenen Kunststoffpartikeln, den entsprechenden Kunststoffmonomeren und eventuell einem Radikalkettenstarter bereitgestellt wird,
- die erste und zweite Mischung wird in einer Form aufeinander angeordnet und auspolymerisiert und
- anschließend aus der Form entfernt.

Nachfolgend wird die Erfindung anhand einer bevorzugten Ausführungsform unter Bezugnahme auf die anliegenden Zeichnungen näher erläutert.

Es zeigen:
- Fig. 1: eine schematische, perspektivische Ansicht einer kreiszylindrischen Ronde zur Herstellung einer Zahnprothese,
- Fig. 2: eine Vorderansicht einer aus der kreiszylindrischen Ronde hergestellten Zahnprothese,
- Fig. 3: eine Seitenansicht einer aus der kreiszylindrischen Ronde hergestellten Zahnprothese und
- Fig. 4: eine schematische Draufsicht eines Zahnfleischelements.

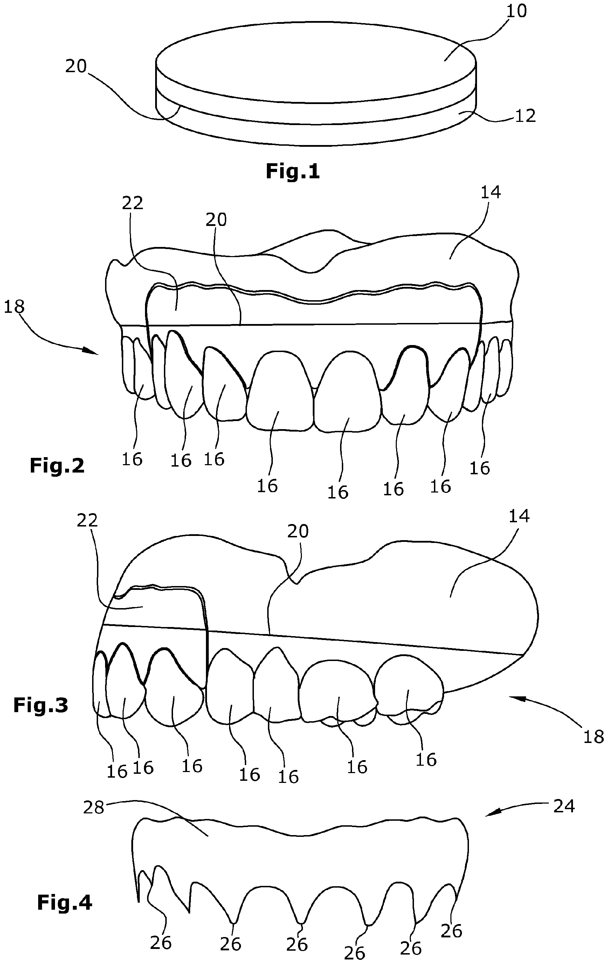

Aus einer im dargestellten Ausführungsbeispiel zweischichtigen kreiszylindrisch aufgebauten Ronde kann die Herstellung einer Vollprothese erfolgen. Die Ronde weist im dargestellten Ausführungsbeispiel zwei Schichten 10, 12 auf, die insbesondere aus demselben Material hergestellt, jedoch unterschiedlich eingefärbt sind. Eine in Fig. 1 obere Schicht 10 dient zur Ausbildung des Kieferelements und ist vorzugsweise zahnfleischfarben eingefärbt. Hieran schließt sich die in Fig. 1 untere Schicht 12 an, die zur Ausbildung des in einer Vollprothese sämtliche Zähne nachbildenden Zahnelements dient.

Durch materialabtragende Bearbeitung wie Fräsen, Schleifen u. dgl. erfolgt die patientenindividuelle Ausgestaltung des Kieferelements 14 sowie des die einzelnen Zähne 16 ausbildenden Zahnelements 18 (Fig. 2). Aufgrund der unterschiedlichen Einfärbung des Zahnelements 18 und des Kieferelements 14 ergibt sich eine ggf. scharfe Trennlinie 20 zwischen diesen beiden Elementen. Insbesondere im Bereich der sichtbaren Zähne wirkt dies unnatürlich.

Erfindungsgemäß ist daher ein als Vertiefung ausgebildeter Aufnahmebereich 22 vorgesehen. Dieser wird vorzugsweise ebenfalls durch materialabtragende Bearbeitung hergestellt. Die Vertiefung 22 erstreckt sich über die sichtbaren Zähne bspw. bis hin zu den Backenzähnen wie schematisch in Fig. 3 dargestellt.

Zum Überdecken der Trennlinie 20 zwischen dem Zahnelement 18 und dem Kieferelement 14 wird in die Vertiefung 22 ein Zahnfleischelement 24 (Fig. 4) eingelegt und insbesondere durch Verkleben fixiert.

In der dargestellten, besonders bevorzugten Ausführungsform ist das Zahnfleischelement derart ausgebildet, dass dieses mehrere Ansätze 26 aufweist, die in montiertem Zustand des Zahnfleischelements 24 zwischen benachbarten Zähnen 16 angeordnet sind und somit den natürlichen Verlauf des Zahnfleisches nachbilden. Die einzelnen Ansätze 26 sind über ein Verbindungselement 28 miteinander verbunden, wobei das gesamte Zahnfleischelement 24 vorzugsweise aus einem Stück hergestellt ist.

Die Herstellung des Zahnfleischelements 24 erfolgt vorzugsweise ebenfalls durch materialabtragende Bearbeitung wie Fräsen, Schleifen u. dgl. Es ist möglich, das Zahnfleischelement, das die Farbe der Schicht 10 aufweist, aus einem Bereich der Ronde herzustellen, der bei der Herstellung der Zahnprothese entfernt würde. Insofern ist es nicht erforderlich einen weiteren Rohling zur Herstellung des Zahnfleischelements zur Verfügung zu stellen.

## Patentansprüche

1. Zahnprothese, die insbesondere durch materialabtragende Bearbeitung eines Rohlings hergestellt ist, mit
einem, mindestens einen Zahn (16) nachbildenden Zahnelement (18) und
einem mit dem Zahnelement (18) verbundenen Kieferelement (14), **dadurch gekennzeichnet, dass**
das Zahnelement (18) und das Kieferelement (14) einstückig ausgebildet ist und das Zahnelement (18) und das Kieferelement (14) im Wesentlichen aus demselben, jedoch unterschiedlich eingefärbten Material hergestellt ist, so dass zwischen Zahnelement (18) und Kieferelement (14) eine Trennlinie (20) ausgebildet ist,
wobei das Zahnelement (18) und/oder das Kieferelement (14) einen Aufnahmebereich (22) zur Anordnung eines Zahnfleischelements (24) aufweist und
wobei ein Zahnfleischelement (24) die Trennlinie (20) zumindest teilweise überdeckt.

2. Zahnprothese nach Anspruch 1, **dadurch gekennzeichnet, dass** der Aufnahmebereich als Vertiefung (22) ausgebildet ist.

3. Zahnprothese nach Anspruch 1 oder 2, **dadurch gekennzeichnet, dass** das Zahnfleischelement (24) zwischen benachbarte Zähne (16) ragende Ansätze (26) aufweist.

4. Zahnprothese nach Anspruch 3, **dadurch gekennzeichnet, dass** Seitenkanten der Ansätze (26) aufeinander zulaufend ausgebildet sind.

5. Zahnprothese nach Anspruch 3 oder 4, **dadurch gekennzeichnet, dass** das Zahnfleischelement (24) ein mehrere Ansätze (26) miteinander verbindendes Verbindungselement (28) aufweist.

## Claims

1. A dental prosthesis, which is produced in particular by a material-removing processing of a blank, comprising
a tooth element (18) imitating at least one tooth (16), and
a jaw element (14) connected with the tooth element (18),
**characterized in that**
the tooth element (18) and the jaw element (14) are formed as a single piece und the tooth element (18) and the jaw element (14) are substantially made from the same material which, however, is colored differently, so that a dividing line (20) is formed between the tooth element (18) and the jaw element (14),
wherein the tooth element (18) and/or the jaw element (14) have a receiving portion (22) for arranging a gingiva element (23) therein, and
wherein a gingiva element (24) at least partially covers the dividing line (20).

2. The dental prosthesis of claim 1, **characterized in that** the receiving portion is designed as a recess (22).

3. The dental prosthesis of claim 1 or 2, **characterized in that** the gingiva element (24) has protrusions (26) extending between adjacent teeth (16).

4. The dental prosthesis of claim 3, **characterized in that** side edges of the protrusions (26) are formed to extend towards each other.

5. The dental prosthesis of claim 3 or 4, **characterized in that** the gingiva element (24) comprises a connecting element (28) connecting a plurality of protrusions (26).

## Revendications

1. Prothèse dentaire qui est fabriquée en particulier par usinage d'une ébauche par enlèvement de matière, avec
un élément de dentition (18) imitant au moins une dent (16) et
un élément de mâchoire (14) relié à l'élément de dentition (18),
**caractérisée en ce que**
l'élément de dentition (18) et l'élément de mâchoire (14) sont formés d'un seul tenant et l'élément de dentition (18) et l'élément de mâchoire (14) sont fabriqués essentiellement dans le même matériau, mais néanmoins de couleurs différentes, de sorte qu'une ligne de démarcation (20) soit formée entre l'élément de dentition (18) et l'élément de mâchoire (14),
l'élément de dentition (18) et/ou l'élément de mâchoire (14) comprenant une zone de réception (22) pour l'agencement d'un élément de gencive (24) et
un élément de gencive (24) recouvrant au moins partiellement la ligne de démarcation (20).

2. Prothèse dentaire selon la revendication 1, **caractérisée en ce que** la zone de réception est réalisée sous la forme d'une cavité (22).

3. Prothèse dentaire selon la revendication 1 ou 2, **caractérisée en ce que** l'élément de gencive (24) comprend des appendices (26) faisant saillie entre des dents (16) adjacentes.

4. Prothèse dentaire selon la revendication 3, **caractérisée en ce que** des bords latéraux des appendices (26) sont réalisés de manière convergente.

5. Prothèse dentaire selon la revendication 3 ou 4, **caractérisée en ce que** l'élément de gencive (24) comprend un élément de liaison (28) reliant plusieurs appendices (26) entre eux.
